# FASCICULE DE BREVET EUROPEEN

(11) **EP 1 629 874 B1**
(45) Date de publication et mention de la délivrance du brevet: **27.04.2011**
(21) Numéro de dépôt: 04104113.8
(22) Date de dépôt: 26.08.2004
(51) Int. Cl.: B01D 21/02

(54) **Extracteur de boues pour stations d'épuration**
Vorrichtung zum Absaugen von Schlamm für Kläranlagen
Apparatus for sewage treatment plants for extracting sludge

(43) Date de publication de la demande: 01.03.2006
(73) Titulaire: EPUR S.A., 4460 Grace-Hollogne (BE)
(72) Inventeur: Hartenstein, Marcel, 4122 Plainevaux (BE)
(74) Mandataire: Office Freylinger

(56) Documents cités:
- DE-A- 19 501 034
- DE-U- 29 520 620
- US-A- 1 357 587
- US-A- 5 271 832

## Description

La présente invention concerne un dispositif d'extraction de boues pour stations d'épuration, une station d'épuration équipé d'un tel dispositif, ainsi qu'un procédé d'extraction de boues sédimentées et surnageantes ne nécessitant pas de vidange complète.

Les stations d'épuration de type biologique produisent en fin de ligne d'épuration des boues dites secondaires qu'il s'agit de décanter et de retenir avant le renvoi des eaux épurées dans le circuit d'évacuation.

Les boues secondaires constituées d'éléments plus denses que l'eau se décantant en fond de cuve ou de bassin sont appelées boues décantées ou sédimentées et celles constituées d'éléments moins denses que l'eau surnageant en surface sont appelées boues surnageantes.

L'extraction des boues peut être générée par deux facteurs de nécessité : soit la vidange, soit une recirculation des boues vers le premier bassin de la station d'épuration ou vers la chambre de digestion de celle-ci, selon le procédé épuratoire retenu.

Afin de récolter les boues qui se sédimentent en fond de cuve, celle-ci est pourvue d'un cône de concentration sur un point central, permettant ainsi une bonne performance d'extraction et d'évacuation au moyen d'un dispositif d'évacuation, par exemple par pompe ou par dispositif de recirculation de type air lift. Ces boues sédimentées peuvent ainsi être facilement et totalement évacuées de la cuve.

Toute la difficulté réside dans l'évacuation des boues surnageantes. En effet, avec les systèmes connus, celle-ci peut se faire en vidangeant entièrement la cuve ou le bassin. Cette opération est alors inutilement coûteuse par le fait que l'essentiel du volume évacué est composé d'eau épurée clarifiée.

En variante, US 1357587 décrit un système d'extraction des boves surnageantes et sédimentées, dans lequel les boves surnageantes sont collectées mécaniquement et dirigées vers une région de décharge commune.

DE 29520620 U1 décrit plusieurs systèmes permettant l'extraction des boves surnageantes et sédimentées, dans lesquels ces boves sont collectées par un dispositif rotatif.

Il serait intéressant de pouvoir extraire les boues sédimentées et surnageantes, de préférence en une seule opération, sans devoir vidanger complètement la cuve.

La présente invention propose par conséquent un dispositif d'extraction de boues pour stations d'épurations ayant une cuve avec un fond en forme de cône selon la revendication 1. Ce dispositif d'extraction de boues comprend un tube vertical avec une partie inférieure placée au centre du cône et une partie supérieure située au niveau de la surface de l'eau, ainsi qu'une admission d'un dispositif d'évacuation des boues située à l'intérieur du tube vertical, le tube ayant une section de passage inférieure dans sa partie inférieure pour l'extraction des boues sédimentées et une section de passage supérieure dans sa partie supérieure pour l'extraction des boues surnageantes.

Un tel dispositif d'extraction permet d'extraire et d'évacuer en une seule opération tant les boues surnageantes, que les boues sédimentées, tout en ne soutirant qu'une quantité minimale d'eau épurée de la cuve. Les avantages principaux de l'invention sont par conséquent sa simplicité, sa rapidité et sa rentabilité. En effet, pour extraire les boues, il suffit d'enclencher, en cas de besoin, le dispositif d'évacuation pendant le temps nécessaire à l'extraction de toutes les boues, puis de l'arrêter. Toute vidange complète est rendue inutile.

Par cuve avec un fond de forme conique utilisable dans le cadre de la présente invention, on entend toute cuve présentant dans sa partie inférieure une forme permettant de concentrer par gravité les boues à un endroit déterminé, généralement au centre, indépendamment de sa forme géométrique.

Pour un fonctionnement optimal du dispositif selon l'invention, il est important de dimensionner correctement le dispositif afin de vidanger prioritairement le tube vertical. En effet, de cette manière les boues surnageantes sont aspirées vers l'intérieur du tube avant que le niveau de l'eau ne diminue en dessous du niveau inférieur de la section de passage supérieure. Ensuite, la différence de hauteur de la colonne d'eau entre l'extérieur et l'intérieur du tube force les boues sédimentées par la section de passage inférieure dans le tube, où elles sont évacuées par le dispositif d'évacuation des boues.

Le dimensionnement du dispositif selon l'invention peut s'opérer sur plusieurs paramètres, en l'occurrence les dimensions respectives des sections de passage inférieure et supérieure, le volume du tube vertical et, le cas échéant, la puissance du dispositif d'évacuation des boues et intègre d'autres facteurs comme par exemple les dimensions de la cuve et le type de boues résiduaires.

Un mode de réalisation avantageux de l'invention prévoit que la section de passage supérieure est plus grande que la section de passage inférieure. De cette manière, la perte de charge dans la partie supérieure est plus réduite et les boues surnageantes sont aspirées prioritairement. A titre indicatif, le rapport entre la section de passage supérieure et la section de passage inférieure vaudra de préférence de 1,5 à 10, ce rapport pouvant bien entendu varier en fonction des autres paramètres et facteurs cités ci-dessus.

L'invention concerne également un procédé selon la revendication 9.

Dans ce cas, les sections de passage pour les boues dans les parties peuvent en principe être formées
- par des orifices ou fenêtres pratiquées dans la paroi du tube central,
- par un espace ou une fente formé(e) entre le bord inférieur du tube central et la paroi du cône, respectivement par la distance entre le bord supérieur immergé du tube central et la surface de l'eau,
les deux configurations pouvant même être combinées sur un seul tube, par exemple avec des fenêtres dans la partie inférieure et avec un bord supérieur immergé.

Dans le cas de fenêtres dans la partie inférieure, le tube vertical est posé sur le fond du cône et les fenêtres se trouvent de préférence sur toute la circonférence du tube. Elles peuvent être de forme variable, par exemple rectangulaire, circulaire ou même de forme quelconque. La section de passage est définie par la surface totale utile des fenêtres, c'est-à-dire grossièrement leur surface totale mouillée.

Dans le cas d'un tube sans fenêtres, la section de passage est définie en principe par la surface totale mouillée libre, c'est-à-dire par la hauteur de la fente circonférentielle entre le cône et la paroi du tube pour la section de passage inférieure, respectivement par la hauteur d'eau au-dessus du bord supérieur du tube pour la section de passage supérieure.

Dans le procédé de l'invention, la section de passage inférieure est par conséquent formée soit par une pluralité de fenêtres pratiquées dans la paroi du tube, soit par un espacement entre la paroi du tube et le cône. Indépendamment, la section de passage supérieure est formée soit par une pluralité de fenêtres pratiquées dans la paroi du tube, soit par un espacement entre la paroi du tube et le niveau de la surface de l'eau.

Pour l'extraction suivie de l'évacuation des boues, il faut disposer d'un dispositif d'évacuation permettant de soutirer les boues. Ce dispositif peut ou non faire partie du dispositif décrit ci-dessus et peut se trouver en principe à tout endroit approprié, en l'occurrence à l'intérieur du tube ou même à l'extérieur de la cuve, dans la mesure où l'admission au dispositif d'évacuation se fait à l'intérieur du tube. Dans le cas le plus courant, le dispositif d'évacuation des boues préféré est une pompe ou un dispositif de type airlift, avantageusement à l'intérieur du tube vertical. Il est bien entendu que tout autre dispositif approprié pourrait également convenir.

Le dispositif d'extraction selon l'invention est particulièrement adapté aux stations d'épuration et surtout aux stations d'épuration domestiques individuelles, parce qu'il ne nécessite aucune connaissance ou surveillance particulière.

Dans cette optique, il est possible d'améliorer davantage le confort d'utilisation du présent dispositif en prévoyant un dispositif de commande permettant d'automatiser l'actionnement du dispositif d'évacuation des boues. En effet, même si l'opération d'extraction simultanée des boues sédimentées et surnageantes se réduit déjà en principe à la mise en marche et l'arrêt du dispositif d'évacuation, elle doit néanmoins être répétée à intervalle plus ou moins régulier afin de garantir le bon fonctionnement de la cuve.

Cette automatisation peut être de type simple et économique, notamment pour les petites stations, se limitant à lancer l'opération d'extraction à intervalle et durée réglables mais fixes, par exemple toutes les semaines ou tous les mois et pendant une durée d'une minute.

Pour les stations plus importantes, il peut être avantageux de ne déclencher l'opération qu'en cas de besoin en prenant en compte différents paramètres, comme l'évolution de la charge hydraulique ou du volume de boues produites dans le temps, au moyen de capteurs appropriés et de déterminer la durée de l'opération en surveillant les effluents évacués.

Le dispositif d'extraction des boues peut être utilisé aussi bien dans des nouvelles cuves spécifiquement prévues à cet effet, que dans des cuves à fond conique existantes de station d'épuration.

Pour des cuves spécifiquement prévues pour le montage du présent dispositif d'extraction des boues, son dimensionnement peut être prédéterminé et le dispositif peut se réduire à sa forme la plus simple détaillée ci-dessus. Cependant, dans le cas de cuves existantes, il peut être avantageux de prévoir un dispositif d'extraction réglable permettant d'adapter lors de l'installation les différents paramètres, en l'occurrence en prévoyant le réglage de la longueur du tube, respectivement de la distance séparant les sections de passage inférieure et supérieure, par exemple au moyen d'un tube télescopique, de la dimension des sections de passage, par exemple par des fenêtres à ajourage variable, etc. Un autre moyen de réglage complémentaire pour un fonctionnement optimal du dispositif d'extraction peut être réalisé par l'ajustement de la puissance de la pompe.

Un aspect supplémentaire, la présente invention propose une station d'épuration d'eaux usées qui comprend un dispositif d'extraction de boues selon la revendication 1. Il est cependant clair que le dispositif peut non seulement être utilisé pour l'extraction de boues dans des stations d'épuration, mais également dans d'autres installations dans lesquels une extraction simple, rapide et économique de résidus sédimentés et surnageants doit être réalisée.

L'invention concerne en outre un procédé d'extraction de boues décantées et surnageantes selon la revendication 9 pour stations d'épurations sans vidange complète de la station dans lequel la station comprend une cuve avec un fond en forme de cône, un dispositif d'évacuation des boues et un dispositif d'extraction des boues, dans lequel ce dispositif d'évacuation des boues est opéré de manière à vidanger prioritairement le tube vertical aspirant d'abord principalement les boues surnageantes et ensuite seulement les boues sédimentées.

D'une manière particulièrement avantageuse, un tel procédé utilise un dispositif d'évacuation des boues piloté de manière à automatiser l'entièreté de l'opération, cette automatisation pouvant être réalisée de la manière décrite plus en détail ci-dessus.

D'autres particularités et caractéristiques de l'invention ressortiront de la description détaillée de deux modes de réalisation avantageux présentés ci-dessous, à titre d'illustration, en référence aux dessins annexés, où
la Figure 1 présente une vue en coupe d'une cuve de décantation de boues secondaires munie d'un dispositif d'extraction des boues à fenêtres selon l'invention, et
la Figure 2 présente une vue en coupe d'une cuve de décantation de boues secondaires munie d'un dispositif d'extraction des boues sans fenêtres utilisable dans le procédé de l'invention.

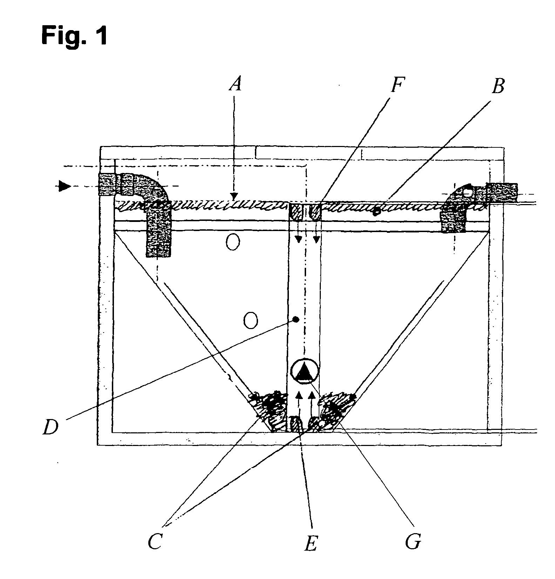

La Figure 1 présente un mode réalisation d'un dispositif d'extraction installé dans une cuve à fond conique servant à extraire les boues surnageantes B et sédimentées C, où A représente le niveau de l'eau dans la cuve. Le tube vertical D comporte des fenêtres E dans sa partie inférieure près du fond du cône et des fenêtres F dans sa partie supérieure dont le bord inférieur se trouve au-dessous du niveau de l'eau A. Une pompe G est disposée à l'intérieur du tube D pour évacuer les boues B et C extraites.

Lorsque la pompe G est mise en marche, soit manuellement par l'opérateur, soit par un dispositif de commande piloté (non représenté), le niveau de l'eau à l'intérieur du tube D descend rapidement et les boues surnageantes B sont aspirées par les fenêtres F fonctionnant à la manière d'un trop-plein. Lorsque les boues B sont évacuées et que le niveau d'eau diminue en dessous du bord inférieur des fenêtres F, les boues sédimentées C sont aspirées à leur tour par les fenêtres E et évacuées par la pompe G. Celle-ci peut ensuite être arrêtée, de nouveau manuellement, de manière automatique après un délai fixe ou lorsque les effluents ne sont plus chargées de boues.

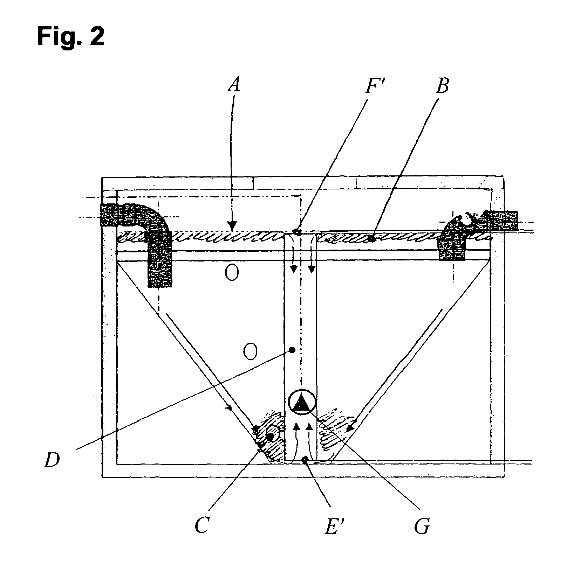

La Figure 2 présente une variante d'un dispositif utilisable dans le procédé de l'invention qui ne comporte pas de fenêtres, mais dans lequel les sections de passage sont définies par un espace E' sur toute la circonférence entre le bord inférieur du tube D et le fond et par un espace circonférentiel F' formé par la différence de hauteur entre le bord supérieur immergé du tube D et le niveau d'eau A.

| Figure 1 - dispositif à fenêtres | |
|---|---|
| A | niveau d'eau |
| B | boues surnageantes |
| C | boues sédimentées |
| D | tube d'aspiration |
| E | fenêtres d'aspiration inférieures |
| F | fenêtres d'aspiration supérieures |
| G | pompe |

| Figure 2 - dispositif à espacements libres | |
|---|---|
| A | niveau d'eau |
| B | boues surnageantes |
| C | boues sédimentées |
| D | tube d'aspiration |
| E' | espace d'aspiration inférieur |
| F' | espace d'aspiration supérieur |
| G | pompe |

## Revendications

1. Dispositif d'extraction de boues pour stations d'épurations ayant une cuve avec un fond en forme de cône,
**caractérisé en ce que** le dispositif comprend
- un tube vertical comprenant une partie inférieure placée au centre du cône et une partie supérieure située au niveau de la surface de l'eau dans ladite cuve, et
- une admission d'un dispositif d'évacuation des boues, située à l'intérieur du tube vertical,
le tube ayant une section de passage inférieure dans sa partie inférieure pour l'extraction des boues sédimentées et une section de passage supérieure dans sa partie supérieure pour l'extraction des boues surnageantes et les sections de passage étant formées par des orifices ou fenêtres pratiquées dans la paroi du tube vertical.

2. Dispositif selon la revendication 1, **caractérisé en ce que** la section de passage supérieure est plus grande que la section de passage inférieure.

3. Dispositif selon la revendication 2, **caractérisé en ce que** le rapport entre la section de passage supérieure et la section de passage inférieure vaut de 1,5 à 10.

4. Dispositif selon l'une quelconque des revendications précédentes, dans lequel la section de passage inférieure est formée par une pluralité de fenêtres pratiquées dans la paroi du tube.

5. Dispositif selon l'une quelconque des revendications précédentes, dans lequel la section de passage supérieure est formée par une pluralité de fenêtres pratiquées dans la paroi du tube.

6. Dispositif selon l'une quelconque des revendications précédentes, comprenant en outre un dispositif d'évacuation des boues qui est une pompe ou un dispositif de type airlift.

7. Dispositif selon la revendication 6, comprenant en outre un dispositif de commande piloté permettant d'automatiser l'actionnement du dispositif d'évacuation des boues.

8. Station d'épuration d'eaux usées comprenant un dispositif d'extraction de boues selon l'une quelconque des revendications précédentes.

9. Procédé d'extraction de boues décantées et surnageantes pour stations d'épurations sans vidange complète de la station dans lequel la station comprend une cuve avec un fond en forme de cône, un dispositif d'évacuation des boues et un dispositif d'extraction des boues comprenant
- un tube vertical comprenant une partie inférieure placée au centre du cône et une partie supérieure située au niveau de la surface de l'eau dans ladite cuve, et
- une admission d'un dispositif d'évacuation des boues, située à l'intérieur du tube vertical,
le tube ayant une section de passage inférieure dans sa partie inférieure pour l'extraction des boues sédimentées et une section de passage supérieure dans sa partie supérieure pour l'extraction des boues surnageantes et les sections de passage étant formées
- soit par des orifices ou fenêtres pratiquées dans la paroi du tube vertical,
- soit par un espace ou une fente formé(e) entre le bord inférieur du tube vertical et le fond en forme de cône, respectivement par la distance entre le bord supérieur immergé du tube vertical et la surface de l'eau dans ladite cuve,
ou par une combinaison de ceux-ci, le procédé comprenant les étapes d'enclenchement du dispositif d'évacuation des boues pendant le temps nécessaire à l'extraction de toutes les boues et de mise à l'arrêt du dispositif d'évacuation des boues.

10. Procédé selon la revendication 9, dans lequel le dispositif d'évacuation des boues est une pompe ou un dispositif de type airlift.

11. Procédé selon l'une quelconque des revendications 9 ou 10, dans lequel le dispositif d'évacuation des boues est piloté.

## Claims

1. A sludge draw-off device for water treatment plants having a tank with a cone-shaped base, **characterised in that** the device comprises
- a vertical tube comprising a lower part positioned at the centre of the cone and an upper part situated at the level of the surface of the water in said tank, and
- an inlet for a device for removing the sludge, located inside the vertical tube,
the tube having a lower flow cross-section in its lower part for drawing off settled sludge and an upper flow cross-section in its upper part for drawing off floating sludge and the flow cross-sections being formed by orifices or windows introduced into the wall of the vertical tube.

2. A device according to claim 1, **characterised in that** the upper flow cross-section is larger than the lower flow cross-section.

3. A device according to claim 2, **characterised in that** the ratio between the upper flow cross-section and the lower flow cross-section is from 1.5 to 10.

4. A device according to any one of the preceding claims, in which the lower flow cross-section is formed by a plurality of windows introduced into the wall of the tube.

5. A device according to any one of the preceding claims, in which the upper flow cross-section is formed by a plurality of windows introduced into the wall of the tube.

6. A device according to any one of the preceding claims, further comprising a device for removing the sludge which is a pump or a device of the airlift type.

7. A device according to claim 6, further comprising a pilot-operated control device allowing actuation of the sludge removal device to be automated.

8. A waste water treatment plant comprising a sludge draw-off device according to any one of the preceding claims.

9. A process for water treatment plants for drawing off decanted and floating sludge without completely draining the plant, in which the plant comprises a tank with a cone-shaped base, a sludge removal device and a sludge draw-off device, comprising
- a vertical tube comprising a lower part positioned at the centre of the cone and an upper part situated at the level of the surface of the water in said tank, and
- an inlet for a device for removing the sludge, located inside the vertical tube,
the tube having a lower flow cross-section in its lower part for drawing off settled sludge and an upper flow cross-section in its upper part for drawing off floating sludge and the flow cross-sections respectively being formed
- either by orifices or windows introduced into the wall of the vertical tube,
- or by a space or a slot formed between the lower edge of the vertical tube and the cone-shaped base, resp. by the distance between the upper submerged edge of the vertical tube and the surface of the water in said tank,
or by a combination of these, the process comprising the steps of starting the device for removing the sludge for the time necessary for drawing off all the sludge and of stopping the device for removing the sludge.

10. A method according to claim 9, in which the device for removing the sludge is a pump or a device of the airlift type.

11. A method according to either one of claims 9 or 10, in which the device for removing the sludge is pilot-operated.

## Patentansprüche

1. Schlammabzugsvorrichtung für Kläranlagen, die einen Behälter mit einem trichterförmigen Boden aufweisen,
**dadurch gekennzeichnet, dass** die Vorrichtung
- ein vertikales Rohr mit einem unteren Teil, der in der Mitte des Trichters angeordnet ist, und einem oberen Teil, der sich im Bereich der Wasseroberfläche im Behälter befindet, und
- einen Einlass für eine Schlammabführungsvorrichtung, der sich im Innern des vertikalen Rohres befindet,
umfasst,
wobei das Rohr einen unteren Durchlassabschnitt in seinem unteren Teil zum Abziehen des Sedimentschlamms und einen oberen Durchlassabschnitt in seinem oberen Teil zum Abziehen des Schwimmschlamms hat und wobei die Durchlassabschnitte durch in der Wand des vertikalen Rohres ausgebildete Öffnungen oder Fenster gebildet sind.

2. Vorrichtung nach Anspruch 1, **dadurch gekennzeichnet, dass** der obere Durchlassabschnitt größer als der untere Durchlassabschnitt ist.

3. Vorrichtung nach Anspruch 2, **dadurch gekennzeichnet, dass** das Verhältnis zwischen oberem Durchlassabschnitt und unterem Durchlassabschnitt 1,5 bis 10 beträgt.

4. Vorrichtung nach irgendeinem der vorhergehenden Ansprüche, bei der der untere Durchlassabschnitt durch eine Vielzahl von Fenstern gebildet ist, die in der Wand des Rohres ausgebildet sind.

5. Vorrichtung nach irgendeinem der vorhergehenden Ansprüche, bei der der obere Durchlassabschnitt durch eine Vielzahl von Fenstern gebildet ist, die in der Wand des Rohres ausgebildet sind.

6. Vorrichtung nach irgendeinem der vorhergehenden Ansprüche, ferner umfassend eine Schlammabführungsvorrichtung, die eine Pumpe oder eine Vorrichtung vom Typ Airlift ist.

7. Vorrichtung nach Anspruch 6, ferner umfassend eine gesteuerte Bedienungsvorrichtung zur automatisierten Betätigung der Schlammabführungsvorrichtung.

8. Abwasserkläranlage mit einer Schlammabzugsvorrichtung nach irgendeinem der vorhergehenden Ansprüche.

9. Verfahren zum Abziehen von Sediment- und Schwimmschlamm für Kläranlagen ohne vollständige Entleerung der Anlage, bei dem die Anlage einen Behälter mit einem trichterförmigen Boden, eine Schlammabführungsvorrichtung sowie eine Schlammabzugsvorrichtung aufweist, welche
- ein vertikales Rohr mit einem unteren Teil, der in der Mitte des Trichters angeordnet ist, und einem oberen Teil, der sich im Bereich der Wasseroberfläche im Behälter befindet, und
- einen Einlass für eine Schlammabführungsvorrichtung, der sich im Innern des vertikalen Rohres befindet,
umfasst,
wobei das Rohr einen unteren Durchlassabschnitt in seinem unteren Teil zum Abziehen des Sedimentschlamms und einen oberen Durchlassabschnitt in seinem oberen Teil zum Abziehen des Schwimmschlamms hat und wobei die Durchlassabschnitte
- entweder durch Öffnungen oder Fenster, die in der Wand des vertikalen Rohres ausgebildet sind,
- oder durch einen Zwischenraum oder Spalt, der zwischen dem unteren Rand des vertikalen Rohres und dem trichterförmigen Boden bzw. durch den Abstand zwischen dem versenkten oberen Rand des vertikalen Rohres und der Wasseroberfläche im Behälter gebildet ist,
oder durch eine Kombination daraus gebildet sind, wobei das Verfahren die Schritte des Einschaltens der Schlammabführungsvorrichtung für die zum Abziehen des gesamten Schlamms notwendige Zeit und des Ausschaltens der Schlammabführungsvorrichtung umfasst.

10. Verfahren nach Anspruch 9, bei dem die Schlammabführungsvorrichtung eine Pumpe oder eine Vorrichtung vom Typ Airlift ist.

11. Verfahren irgendeinem der Ansprüche 9 oder 10, bei dem die Schlammabführungsvorrichtung gesteuert ist.
